# EUROPEAN PATENT APPLICATION

(11) **EP 3 820 162 A1**
(43) Date of publication of application: **12.05.2021**
(21) Application number: 19842126.5
(22) Date of filing: 22.05.2019
(51) Int. Cl.: H04R 3/00, H04R 1/10, H04R 29/00

(54) **SPEECH DATA PROCESSING METHOD AND RELATED PRODUCT**

(30) Priority: 26.07.2018 CN 201810841700
(71) Applicant: GUANGDONG OPPO MOBILE TELECOMMUNICATIONS CORP., LTD., Dongguan Guangdong 523860 (CN)
(72) Inventor: YAN, Congwei, Dongguan, Guangdong 523860 (CN)
(74) Representative: Manitz Finsterwald Patent- und Rechtsanwaltspartnerschaft mbB
(86) International application number: PCT/CN2019/088022
(87) International publication number: WO 2020/019844

(57) **Abstract**

A method for processing voice data and related products are provided. The method includes the following. In response to receiving an obtaining instruction for target voice data, a first operation and a second operation are performed in parallel, where the first operation is to obtain first voice data with a first microphone, and the second operation is to obtain second voice data with a second microphone. The first microphone is determined to be blocked according to the first voice data and the second microphone is determined to be blocked according to the second voice data. The target voice data is generated according to the first voice data and the second voice data. By adopting technical solutions of implementations of the disclosure, integrity of voice data obtained when the wireless earphone is blocked can be improved.

## Description

### TECHNICAL FIELD

This disclosure relates to the technical field of wireless earphones, and particularly to a method for processing voice data and related products.

### BACKGROUND

With the popularity and rapid development of mobile terminals (e.g., smart phones), various earphones have become devices for people to listen to media daily. Since earphone cords of wired earphones are easily damaged, which leads to short service life and high cost of earphones, wireless earphones have emerged.

At present, a hole defined on the wireless earphone corresponding to a microphone is easily blocked due to dust, water, etc., resulting in intermittent sound and low volume in voice data obtained with the microphone of the wireless earphone, which affects normal use of the wireless earphone.

### SUMMARY

According to implementations of the disclosure, a method for processing voice data and related products are provided, which can improve integrity of obtained voice data when a wireless earphone is blocked.

In a first aspect of the disclosure, a method for processing voice data is provided. The method is applicable to a wireless earphone including a first wireless earphone and a second wireless earphone. The first wireless earphone includes a first microphone, and the second wireless earphone includes a second microphone. In response to receiving an obtaining instruction for target voice data, a first operation and a second operation are performed in parallel, where the first operation is to obtain first voice data with the first microphone, and the second operation is to obtain second voice data with the second microphone. The first microphone is determined to be blocked according to the first voice data and the second microphone is determined to be blocked according to the second voice data. The target voice data is generated according to the first voice data and the second voice data.

In a second aspect of the disclosure, a device for processing voice data is provided. The device is applicable to a wireless earphone including a first wireless earphone and a second wireless earphone. The first wireless earphone includes a first microphone, and the second wireless earphone includes a second microphone. The device for processing voice data includes an operating unit, a detecting unit, and a processing unit. The operating unit is configured to perform a first operation and a second operation in parallel in response to receiving an obtaining instruction for target voice data, where the first operation is to obtain first voice data with the first microphone, and the second operation is to obtain second voice data with the second microphone. The detecting unit is configured to determine that the first microphone is blocked according to the first voice data and the second microphone is blocked according to the second voice data. The processing unit is configured to generate the target voice data according to the first voice data and the second voice data.

In a third aspect of the disclosure, a wireless earphone is provided. The wireless earphone includes a processor, a memory, and one or more programs. The one or more programs are stored in the memory and configured to be executed by the processor. The programs include instructions which, when executed by the processor, cause the processor to execute the operations in the method of the first aspect.

In a fourth aspect of the disclosure, a computer-readable storage medium is provided. The computer-readable storage medium stores a computer program for electronic data interchange. The computer program includes instructions which are operable to execute all or part of the operations in the method of the first aspect.

In a fifth aspect of the disclosure, a computer program product is provided. The computer program product includes a non-transitory computer-readable storage medium storing a computer program. The computer program is operable with a computer to execute all or part of the operations in the method of the first aspect. The computer program product may be a software installation package.

### BRIEF DESCRIPTION OF THE DRAWINGS

The following will give a brief description of accompanying drawings used for describing implementations of the disclosure.
FIG. 1 is a schematic diagram illustrating a system architecture of a wireless earphone system according to some implementations.
FIG. 2 is a schematic flowchart illustrating a method for processing voice data according to some implementations.
FIG. 3 is a schematic flowchart illustrating a method for processing voice data according to other implementations.
FIG. 4 is a schematic flowchart illustrating a method for processing voice data according to other implementations.
FIG. 5 is a schematic structural diagram illustrating a wireless earphone according to some implementations.
FIG. 6 is a block diagram illustrating functional units of a device for processing voice data according to some implementations.

### DETAILED DESCRIPTION

In order for those skilled in the art to better understand technical solutions of the disclosure, technical solutions of implementations will be described clearly and completely with reference to accompanying drawings in the implementations. Apparently, implementations described hereinafter are merely some implementations, rather than all implementations, of the disclosure. All other implementations obtained by those of ordinary skill in the art based on the implementations without creative efforts shall fall within the protection scope of the disclosure.

The terms "first", "second", and the like used in the specification, the claims, and the accompany drawings of the disclosure are used to distinguish different objects rather than describe a particular order. The terms "include", "comprise", and "have" as well as variations thereof are intended to cover non-exclusive inclusion. For example, a process, method, system, product, or device including a series of steps or units is not limited to the listed steps or units, on the contrary, it can optionally include other steps or units that are not listed; alternatively, other steps or units inherent to the process, method, product, or device can be included either.

The term "implementation" referred to herein means that particular features, structures, or properties described in conjunction with the implementations may be defined in at least one implementation of the disclosure. The phrase "implementation" appearing in various places in the specification does not necessarily refer to the same implementation or an independent/ alternative implementation that is mutually exclusive with other implementations. Those skilled in the art will understand expressly and implicitly that an implementation described herein may be combined with other implementations.

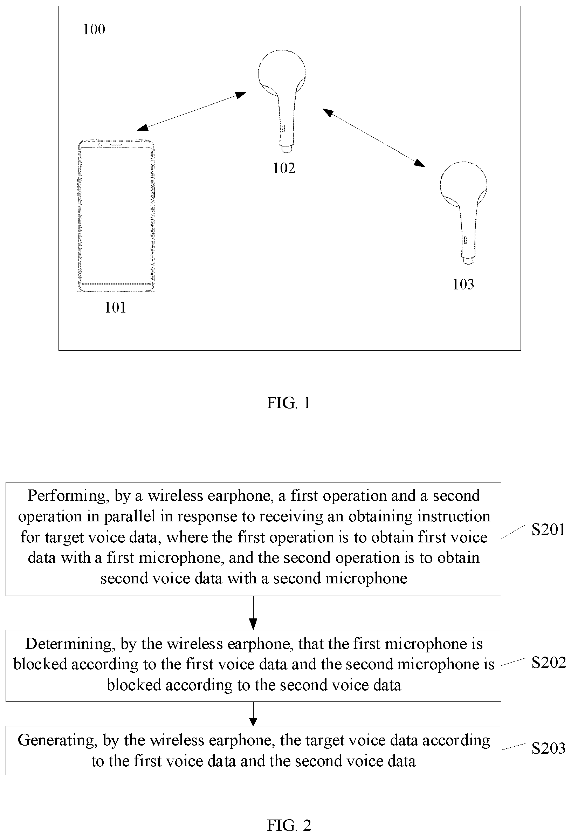

FIG. 1 is a schematic diagram illustrating a wireless earphone system 100 according to some implementations. As illustrated in FIG. 1, the system 100 includes a mobile terminal 101, a first wireless earphone 102, and a second wireless earphone 103. The system 100 uses any of the following communication mechanisms. For a first communication mechanism, a first communication link between the mobile terminal 101 and the first wireless earphone 102 is established, and a second communication link between the first wireless earphone 102 and the second wireless earphone 103 is established. That is, a communication mechanism between the first wireless earphone 102/the second wireless earphone 103 and the mobile terminal 101 adopts a master-slave communication mechanism (e.g., a Bluetooth protocol can be used in this case). For a second communication mechanism, a first communication link between the mobile terminal 101 and the first wireless earphone 102 is established, and a second communication link between the mobile terminal 101 and the second wireless earphone 103 is established. That is, both the first wireless earphone 102 and the second wireless earphone 103 are used as master earphones that directly communicate with the mobile terminal 101. The master earphone herein refers to an earphone that interchanges, via a communication link, a preset type of data with the mobile terminal 101 directly. A slave earphone refers to an earphone that interchanges a preset type of data, which is transferred via the master earphone, with the mobile terminal 101. The preset type of data includes media data and/or call data, where the media data is audio data and/or video data of the mobile terminal 101 other than the call voice data, and the call data is call-voice data of the mobile terminal 101. The first wireless earphone 102 and the second wireless earphone 103 may be Bluetooth wireless earphones, and so on. The mobile terminal 101 may include various handheld devices with wireless communication functions, on-board devices, wearable devices (e.g., smart watches, smart bracelets, pedometers, etc.), computing devices or other processing devices connected to a wireless modem, as well as various forms of user equipment (UE), mobile stations (MS), terminal devices, etc. For convenience of description, the above-mentioned devices are collectively referred to as mobile terminals.

Hereinafter, implementations of the disclosure will be described in detail.

FIG. 2 is a schematic flowchart illustrating a method for processing voice data according to some implementations. The method is applicable to a wireless earphone including a first wireless earphone and a second wireless earphone. As illustrated in FIG. 2, the method includes the following.

At block S201, in response to receiving an obtaining instruction for target voice data, the wireless earphone performs a first operation and a second operation in parallel, where the first operation is to obtain first voice data with a first microphone of the first wireless earphone, and the second operation is to obtain second voice data with a second microphone of the second wireless earphone.

The target voice data herein refers to voice data to be recorded by the wireless earphone. The target voice data may be voice data that needs to be recorded through the microphone and sent to a peer when a voice or video chat application is used, or may be voice data that needs to be recorded when a user communicates with teammates during use of a game application, which is not limited in the disclosure.

The obtaining instruction may be an instruction generated by operating the mobile terminal when the user needs to record voice data with a microphone (e.g., the obtaining instruction is sent by the mobile terminal to the wireless earphone after a double click or a long press on a designated area of a touch screen of the mobile terminal), may be an instruction generated by operating the wireless earphone when the user needs to record voice data with a microphone (e.g., the obtaining instruction is generated in response to tapping or double-clicking the wireless earphone), or the like, which is not limited in the disclosure.

The first voice data and the second voice data are all or part of the target voice data, which is not limited in the disclosure.

At block S202, the wireless earphone determines that the first microphone is blocked according to the first voice data and the second microphone is blocked according to the second voice data.

The operation of detecting by the wireless earphone according to the first voice data whether a hole corresponding to the first microphone is blocked and the operation of detecting by the wireless earphone according to the second voice data whether a hole corresponding to the second microphone is blocked can be performed in two different threads at the same time, which can increase a detection speed. The two operations can also be performed sequentially to reduce a processing bandwidth required by the wireless earphone, which is not limited in the disclosure.

The wireless earphone can detect whether the first microphone is blocked according to the first voice data in various manners. For example, whether the first microphone is blocked is detected according to the volume of the first voice data, is detected according to a voice frequency of the first voice data, or is detected by detecting whether the first voice data is intermittent, which is not limited herein. The wireless earphone can detect whether the second microphone is blocked according to the second voice data in a manner same as or different from detecting whether the first microphone is blocked, which is not limited in the disclosure.

At block S203, the wireless earphone generates the target voice data according to the first voice data and the second voice data.

The manners for the wireless earphone to generate the target voice data according to the first voice data and the second voice data may be various. For example, the target voice data may be generated by replacing a part of the first voice data having a relatively low voice frequency with audio data in the second voice data corresponding to the part of the first voice data, or by replacing a part of the second voice data whose amplitude is zero with audio data in the first voice data corresponding to the part of the second voice data, or by inputting the first voice data and the second voice data into an artificial intelligence model, which is not limited in the disclosure.

In the implementations of the disclosure, the wireless earphone performs a first operation and a second operation in parallel in response to receiving an obtaining instruction for target voice data (where the first operation is to obtain first voice data with the first microphone and the second operation is to obtain second voice data with the second microphone). Then the wireless earphone determines that the first microphone is blocked according to the first voice data and the second microphone is blocked according to the second voice data. The wireless earphone generates the target voice data according to the first voice data and the second voice data. As can be seen, in response to receiving the obtaining instruction for the target voice data and detecting that the first microphone of the first wireless earphone and the second microphone of the second wireless earphone are blocked, the wireless earphone can combine the first voice data obtained when the first wireless earphone is blocked and the second voice data obtained when the second wireless earphone is blocked into the target voice data, which is beneficial to improving integrity of obtained voice data. In addition, the first operation and the second operation can be performed in parallel, which can improve a speed of data processing.

In one implementation, the target voice data is generated according to the first voice data and the second voice data as follows. The first voice data is divided according to a first time interval to obtain a first data-segment group. The second voice data is divided according to a second time interval to obtain a second data-segment group. The target voice data is generated by combining the first data-segment group and the second data-segment group.

The first time interval and the second time interval herein may be the same or different, which are not limited herein. For example, the time length of the first time interval may be 0.1 ms, 0.5 ms, etc., and the time length of the second time interval may be 0.2 ms, 0.6ms, etc., which are not limited in the disclosure.

The first data-segment group includes multiple first data segments, and the second data-segment group includes multiple second data segments. In one implementation, the first time interval is the same as the second time interval, and the target voice data is generated by combining the first data-segment group and the second data-segment group as follows. For each first time interval, a first data segment corresponding to the first time interval is compared with a second data segment corresponding to a second time interval, to select a data segment with a higher voice frequency from the first data segment and the second data segment, where the second time interval corresponds to the first time interval. All selected data segments are combined to obtain the target voice data. In another implementation, the first time interval is the same as the second time interval, and the target voice data is generated by combining the first data-segment group and the second data-segment group as follows. At least one data segment having a relatively low voice frequency is determined in the first data-segment group, and at least one data segment of the second data-segment group corresponding to the determined at least one data segment is determined. The target voice data is generated by replacing the at least one data segment having a relatively low voice frequency in the first data-segment group with the determined at least one data segment of the second data-segment group. It should be noted that, the generation manners of the target voice data are not limited in the disclosure.

As can be seen, in the implementations of the disclosure, the wireless earphone can divide the first voice data to obtain the first data-segment group and divide the second voice data to obtain the second data-segment group, and generate the target voice data according to the first data-segment group and the second data-segment group. As such, involved algorithms can be simplified, and integrity of the target voice data and convenience of obtaining of the target voice data can be improved.

In one implementation, the target voice data is generated by combining the first data-segment group and the second data-segment group as follows. At least one first data segment in the first data-segment group whose frequency is lower than a preset threshold frequency is determined. At least one second data segment in the second data-segment group corresponding to the at least one first data segment in terms of a time parameter is obtained. The target voice data is generated by combining a data segment(s) of the first data-segment group other than the at least one first data segment with the at least one second data segment.

The number of the at least one first data segment is the same as the number of the at least one second data segment. The preset threshold frequency is an empirical value, which may be set in advance in the wireless earphone by technical developers before the wireless earphone leaves the factory. The preset threshold frequency may also be a highest value or an average value of user's voice frequencies determined according to previous data (i.e., historical data), which is not limited in the disclosure.

As can be seen, in the implementations of the disclosure, the wireless earphone can select at least one first data segment in the first data-segment group whose frequency is lower than the preset threshold frequency and then determine at least one data segment in the second data-segment group (used for replacement), instead of comparing each first data segment with a second data segment corresponding to the first data segment, which is beneficial to increasing a speed of data processing.

In one implementation, the target voice data is generated by combining the data segment(s) of the first data-segment group other than the at least one first data segment with the at least one second data segment as follows. Reference voice data is obtained by combining, according to time identifiers of data obtaining, the data segment(s) of the first data-segment group other than the at least one first data segment with the at least one second data segment. In response to detecting existence a missing data segment in the reference voice data, a keyword is determined from a preset keyword set according to a data amount of the missing data segment. The target voice data is obtained by adding voice data corresponding to the keyword to the missing data segment.

The missing data segment herein may be a data segment with a frequency lower than a preset threshold frequency, or a data segment with an amplitude less than a preset threshold amplitude, or a data segment with no voice data, which is not limited in the disclosure.

Different data amounts correspond to different keywords. For example, a first data amount corresponds to a keyword "of', a second data amount corresponds to a keyword "yes", etc., which is not limited in the disclosure. The preset keyword set may include words that appear most frequently in user's voice data obtained from historical data, uses' favorite words analyzed by technical developers based on big data, and the like. The keyword may be a word that does not affect the actual meaning of the target voice data, such as "of', "ha-ha", and so on, which is not limited herein.

Parameters of voice data corresponding to the keyword to be added (e.g., volume, timbre, and other parameters) may be set according to user's voice data in history records, so that the voice data corresponding to the keyword to be added is more in line with user's tone.

As can be seen, in the implementations of the disclosure, in the case that there is still a missing data segment after the wireless earphone combines data segments in the first data-segment group and the second data-segment group, a keyword is added to the data segments. As such, continuity of the target voice data can be ensured while not changing the meaning of the target voice data, thereby improving intelligence of data processing.

In one implementation, the first microphone is determined to be blocked according to the first voice data and the second microphone is determined to be blocked according to the second voice data as follows. A first data amount of voice data in the first voice data whose volume is less than a threshold volume and a second data amount of voice data in the second voice data whose volume is less than the volume threshold are determined. In response to detecting that a proportion of the first data amount to a data amount of the first voice data is greater than a preset threshold proportion, the first microphone is determined to be blocked. In response to detecting that a proportion of the second data amount to a data amount of the second voice data is greater than the preset threshold proportion, the second microphone is determined to be blocked.

The preset threshold proportion herein is an empirical value, and is set in the wireless earphone by technical developers before the wireless earphone leaves the factory. For example, the preset threshold proportion is 50%, 60%, etc., which is not limited in the disclosure.

As can be seen, in the implementations of the disclosure, the wireless earphone can determine whether the first wireless earphone is blocked according to a proportion of voice discontinuities in the first voice data and whether the second wireless earphone is blocked according to a proportion of voice discontinuities in the second voice data, instead of comparing an attribute parameter of the voice with a preset parameter, which can reduce environmental interference, thereby improving accuracy of determining of the blocked state.

In one implementation, the wireless earphone is in communication connection with a mobile terminal, and the method further includes the following. The target voice data is obtained with the mobile terminal. The first microphone and the second microphone are determined to be blocked according to the first voice data and the second voice data as follows. In response to detecting that a first difference between first energy of the first voice data and second energy of the second voice data is less than a first preset difference, the first energy is compared with third energy of the target voice data obtained by the mobile terminal. In response to detecting that a second difference between the first energy and the third energy is greater than a second preset difference, the first microphone and the second microphone are determined to be blocked.

The voice data is audio. Audio is a kind of sound wave, where the sound wave is a kind of mechanical wave. The sound wave itself has energy, and the energy can be calculated based on a frequency, an amplitude, a wave speed, and a density of a propagation medium, that is, an average of the amount of energy flowing per unit time through a medium per unit area represents sound energy per unit area.

As can be seen, in the implementations of the disclosure, when the wireless earphone detects that a difference between the first energy of the first voice data and the second energy of the second voice data is relatively small, it indicates that a state of the first microphone is the same as a state of the second microphone. When the wireless earphone detects that a difference between the first energy and the third energy is relatively large, it indicates that the first microphone is blocked, and it also indicates that the second microphone is blocked. The first microphone and the second microphone are determined to be blocked based on comparison of multiple differences, which is beneficial to improving accuracy of detecting the blocked state.

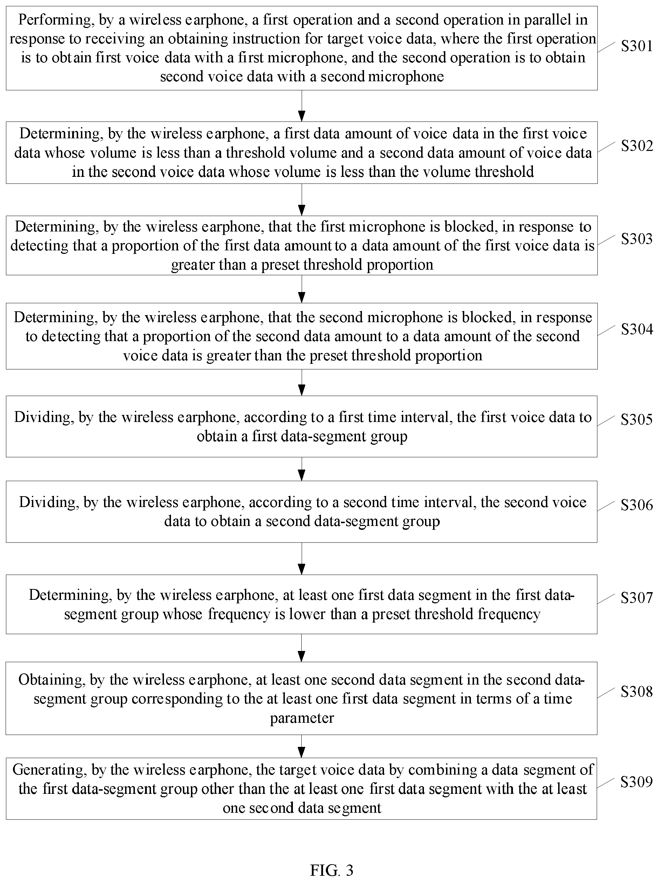

Similar to the implementations described in conjunction with FIG. 2, FIG. 3 is a schematic flowchart illustrating a method for processing voice data according to other implementations. The method is applicable to a wireless earphone including a first wireless earphone and a second wireless earphone. As illustrated in FIG. 3, the method for processing voice data includes the following.

At block S301, in response to receiving an obtaining instruction for target voice data, the wireless earphone performs a first operation and a second operation in parallel, where the first operation is to obtain first voice data with a first microphone of the first wireless earphone, and the second operation is to obtain second voice data with a second microphone of the second wireless earphone.

At block S302, the wireless earphone determines a first data amount of voice data in the first voice data whose volume is less than a threshold volume, and a second data amount of voice data in the second voice data whose volume is less than the volume threshold.

At block S303, in response to detecting that a proportion of the first data amount to a data amount of the first voice data is greater than a preset threshold proportion, the wireless earphone determines that the first microphone is blocked.

At block S304, in response to detecting that a proportion of the second data amount to a data amount of the second voice data is greater than the preset threshold proportion, the wireless earphone determines that the second microphone is blocked.

At block S305, the wireless earphone divides, according to a first time interval, the first voice data to obtain a first data-segment group.

At block S306, the wireless earphone divides, according to a second time interval, the second voice data to obtain a second data-segment group.

At block S307, the wireless earphone determines at least one first data segment in the first data-segment group whose frequency is lower than a preset threshold frequency.

At block S308, the wireless earphone obtain at least one second data segment in the second data-segment group corresponding to the at least one first data segment in terms of a time parameter.

At block S309, the wireless earphone generates the target voice data by combining a data segment of the first data-segment group other than the at least one first data segment with the at least one second data segment.

In the implementations of the disclosure, the wireless earphone performs a first operation and a second operation in parallel in response to receiving an obtaining instruction for target voice data (where the first operation is to obtain first voice data with the first microphone and the second operation is to obtain second voice data with the second microphone). Then the wireless earphone determines that the first microphone is blocked according to the first voice data and the second microphone is blocked according to the second voice data. The wireless earphone generates the target voice data according to the first voice data and the second voice data. As can be seen, in response to receiving the obtaining instruction for the target voice data and detecting that the first microphone of the first wireless earphone and the second microphone of the second wireless earphone are blocked, the wireless earphone can combine the first voice data obtained when the first wireless earphone is blocked and the second voice data obtained when the second wireless earphone is blocked into the target voice data, which is beneficial to improving integrity of obtained voice data. Moreover, the first operation and the second operation can be performed in parallel, which can improve a speed of data processing.

In addition, the wireless earphone can determine whether the first wireless earphone is blocked according to a proportion of voice discontinuities in the first voice data and whether the second wireless earphone is blocked according to a proportion of voice discontinuities in the second voice data, instead of comparing an attribute parameter of the voice with a preset parameter, which can reduce environmental interference, thereby improving accuracy of determining of the blocked state.

In addition, the wireless earphone can divide the first voice data to obtain the first data-segment group and divide the second voice data to obtain the second data-segment group, and generate the target voice data according to the first data-segment group and the second data-segment group. As such, involved algorithms can be simplified, and integrity of the target voice data and convenience of obtaining of the target voice data can be improved. Moreover, the wireless earphone can select at least one first data segment in the first data-segment group whose frequency is lower than the preset threshold frequency and then determine at least one data segment in the second data-segment group (used for replacement), instead of comparing each first data segment with a second data segment corresponding to the first data segment, which is beneficial to increasing a speed of data processing.

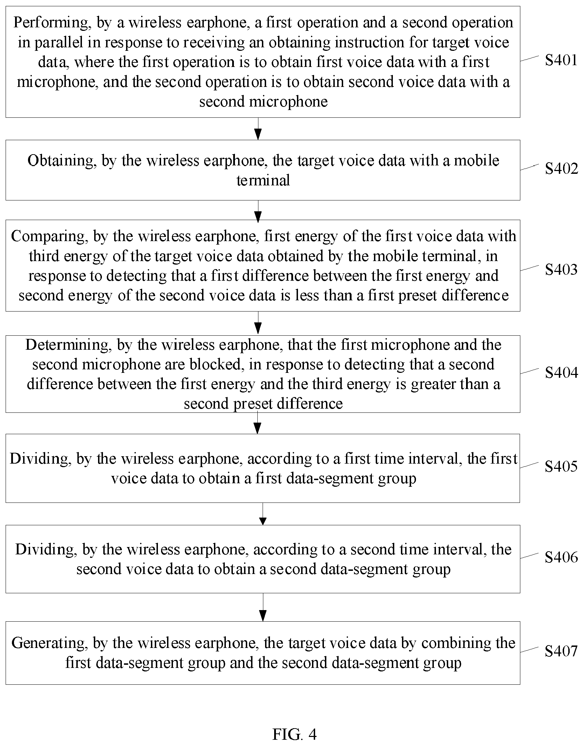

Similar to the implementations described in conjunction with FIG. 2, FIG. 4 is a schematic flowchart illustrating a method for processing voice data according to other implementations. The method is applicable to a wireless earphone including a first wireless earphone and a second wireless earphone. As illustrated in FIG. 4, the method for processing voice data includes the following.

At block S401, in response to receiving an obtaining instruction for target voice data, the wireless earphone performs a first operation and a second operation in parallel, where the first operation is to obtain first voice data with a first microphone of the first wireless earphone, and the second operation is to obtain second voice data with a second microphone of the second wireless earphone.

At block S402, the wireless earphone obtains the target voice data with a mobile terminal.

At block S403, in response to detecting that a first difference between first energy of the first voice data and second energy of the second voice data is less than a first preset difference, the wireless earphone compares the first energy with third energy of the target voice data obtained by the mobile terminal.

At block S404, in response to detecting that a second difference between the first energy and the third energy is greater than a second preset difference, the wireless earphone determines that the first microphone and the second microphone are blocked.

At block S405, the wireless earphone divides, according to a first time interval, the first voice data to obtain a first data-segment group.

At block S406, the wireless earphone divides, according to a second time interval, the second voice data to obtain a second data-segment group.

At block S407, the wireless earphone generates the target voice data by combining the first data-segment group and the second data-segment group.

As can be seen, in the implementations of the disclosure, the wireless earphone performs a first operation and a second operation in parallel in response to receiving an obtaining instruction for target voice data (where the first operation is to obtain first voice data with the first microphone and the second operation is to obtain second voice data with the second microphone). Then the wireless earphone determines that the first microphone is blocked according to the first voice data and the second microphone is blocked according to the second voice data. The wireless earphone generates the target voice data according to the first voice data and the second voice data. As can be seen, in response to receiving the obtaining instruction for the target voice data and detecting that the first microphone of the first wireless earphone and the second microphone of the second wireless earphone are blocked, the wireless earphone can combine the first voice data obtained when the first wireless earphone is blocked and the second voice data obtained when the second wireless earphone is blocked into the target voice data, which is beneficial to improving integrity of obtained voice data. Moreover, the first operation and the second operation can be performed in parallel, which can improve a speed of data processing.

In addition, when the wireless earphone detects that a difference between the first energy of the first voice data and the second energy of the second voice data is relatively small, it indicates that a state of the first microphone is the same as a state of the second microphone. When the wireless earphone detects that a difference between the first energy and the third energy is relatively large, it indicates that the first microphone is blocked, and it also indicates that the second microphone is blocked. The first microphone and the second microphone are determined to be blocked based on comparison of multiple differences, which is beneficial to improving accuracy of detecting the blocked state.

In addition, the wireless earphone can divide the first voice data to obtain the first data-segment group and divide the second voice data to obtain the second data-segment group, and generate the target voice data according to the first data-segment group and the second data-segment group. As such, involved algorithms can be simplified, and integrity of the target voice data and convenience of obtaining of the target voice data can be improved.

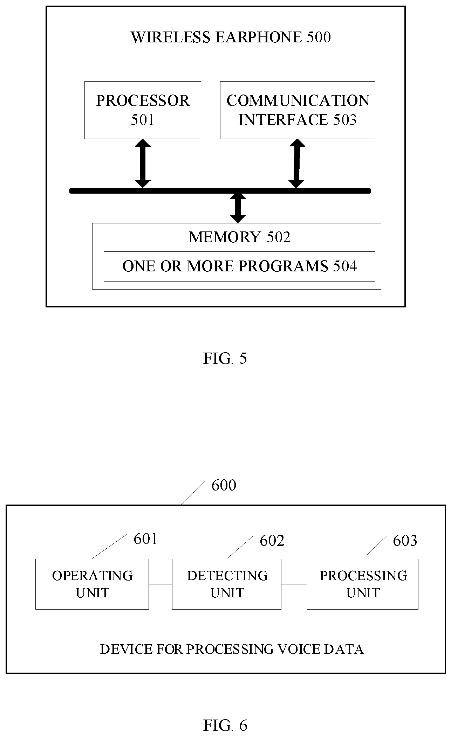

Similar to the implementations described in conjunction with FIG. 2, FIG. 3, and FIG. 4, FIG. 5 is a schematic structural diagram illustrating a wireless earphone 500 according to some implementations. As illustrated in FIG. 5, the wireless earphone includes a first wireless earphone including a first microphone and a second wireless earphone including a second microphone. The wireless earphone includes a processor 501, a memory 502, a communication interface 503, and one or more programs 504. The one or more programs 504 are stored in the memory 502 and configured to be executed by the processor 501. The programs include instructions configured to execute the following operations. In response to receiving an obtaining instruction for target voice data, a first operation and a second operation are performed in parallel, where the first operation is to obtain first voice data with the first microphone, and the second operation is to obtain second voice data with the second microphone. The first microphone is determined to be blocked according to the first voice data and the second microphone is determined to be blocked according to the second voice data. The target voice data is generated according to the first voice data and the second voice data.

As can be seen, in the implementations of the disclosure, the wireless earphone performs a first operation and a second operation in parallel in response to receiving an obtaining instruction for target voice data (where the first operation is to obtain first voice data with the first microphone and the second operation is to obtain second voice data with the second microphone). Then the wireless earphone determines that the first microphone is blocked according to the first voice data and the second microphone is blocked according to the second voice data. The wireless earphone generates the target voice data according to the first voice data and the second voice data. As can be seen, in response to receiving the obtaining instruction for the target voice data and detecting that the first microphone of the first wireless earphone and the second microphone of the second wireless earphone are blocked, the wireless earphone can combine the first voice data obtained when the first wireless earphone is blocked and the second voice data obtained when the second wireless earphone is blocked into the target voice data, which is beneficial to improving integrity of obtained voice data. In addition, the first operation and the second operation can be performed in parallel, which can improve a speed of data processing.

In one implementation, the instructions in the programs 504 operable with the processor 501 to generate the target voice data according to the first voice data and the second voice data are operable with the processor 501 to: divide, according to a first time interval, the first voice data to obtain a first data-segment group; divide, according to a second time interval, the second voice data to obtain a second data-segment group; and generate the target voice data by combining the first data-segment group and the second data-segment group.

In one implementation, the instructions in the programs 504 operable with the processor 501 to generate the target voice data by combining the first data-segment group and the second data-segment group are operable with the processor 501 to: determine at least one first data segment in the first data-segment group whose frequency is lower than a preset threshold frequency; obtain at least one second data segment in the second data-segment group corresponding to the at least one first data segment in terms of a time parameter; and generate the target voice data by combining a data segment of the first data-segment group other than the at least one first data segment with the at least one second data segment.

In one implementation, the instructions in the programs 504 operable with the processor 501 to generate the target voice data by combining the data segment of the first data-segment group other than the at least one first data segment with the at least one second data segment are operable with the processor 501 to: obtain reference voice data by combining, according to time identifiers of data obtaining, the data segment of the first data-segment group other than the at least one first data segment with the at least one second data segment; determine a keyword from a preset keyword set according to a data amount of a missing data segment, in response to detecting existence the missing data segment in the reference voice data; and obtain the target voice data by adding voice data corresponding to the keyword to the missing data segment.

In one implementation, the instructions in the programs 504 operable with the processor 501 to determine that the first microphone is blocked according to the first voice data and the second microphone is blocked according to the second voice data are operable with the processor 501 to: determine a first data amount of voice data in the first voice data whose volume is less than a threshold volume, and a second data amount of voice data in the second voice data whose volume is less than the volume threshold; determine that the first microphone is blocked, in response to detecting that a proportion of the first data amount to a data amount of the first voice data is greater than a preset threshold proportion; and determine that the second microphone is blocked, in response to detecting that a proportion of the second data amount to a data amount of the second voice data is greater than the preset threshold proportion.

In one implementation, the wireless earphone is in communication connection with a mobile terminal, and the programs further include instructions operable with the processor to: obtain the target voice data with the mobile terminal. The instructions in the programs 504 operable with the processor 501 to determine that the first microphone is blocked according to the first voice data and the second microphone is blocked according to the second voice data are operable with the processor 501 to: compare first energy of the first voice data with third energy of the target voice data obtained by the mobile terminal, in response to detecting that a first difference between the first energy and second energy of the second voice data is less than a first preset difference; and determine that the first microphone and the second microphone are blocked, in response to detecting that a second difference between the first energy and the third energy is greater than a second preset difference.

The foregoing technical solutions of the implementations of the disclosure are mainly described from the viewpoint of execution of the method. It can be understood that, in order to implement the above functions, the wireless earphone includes hardware structures and/or software modules corresponding to the respective functions. Those skilled in the art should readily recognize that, in combination with the exemplary units and scheme steps or operations described in the implementations disclosed herein, the disclosure can be implemented in hardware or a combination of hardware and computer software. Whether a function is implemented by way of hardware or computer software driving hardware depends on the particular application and design constraints of the technical solution. Those skilled in the art may use different methods to implement the described functions for each particular application, but such implementation should not be considered as beyond the scope of the disclosure.

According to the implementations of the disclosure, functional units may be divided for the wireless earphone in accordance with the foregoing method examples. For example, functional units may be divided according to corresponding functions, and two or more functions may be integrated into one processing unit. The above-mentioned integrated unit can be implemented in the form of hardware or software functional units. It should be noted that the division of units in the implementations of the disclosure is schematic and is merely a logical function division; there may be other division manners in actual implementation.

FIG. 6 is a block diagram illustrating functional units of a device 600 for processing voice data according to some implementations. The device 600 is applicable to a wireless earphone. The wireless earphone includes a first wireless earphone including a first microphone and a second wireless earphone including a second microphone. The device 600 includes an operating unit 601, a detecting unit 602, and a processing unit 603. The operating unit 601 is configured to perform a first operation and a second operation in parallel in response to receiving an obtaining instruction for target voice data, where the first operation is to obtain first voice data with the first microphone and the second operation is to obtain second voice data with the second microphone. The detecting unit 602 is configured to determine that the first microphone is blocked according to the first voice data and the second microphone is blocked according to the second voice data. The processing unit 603 is configured to generate the target voice data according to the first voice data and the second voice data.

As can be seen, in the implementations of the disclosure, the wireless earphone performs a first operation and a second operation in parallel in response to receiving an obtaining instruction for target voice data (where the first operation is to obtain first voice data with the first microphone and the second operation is to obtain second voice data with the second microphone). Then the wireless earphone determines that the first microphone is blocked according to the first voice data and the second microphone is blocked according to the second voice data. The wireless earphone generates the target voice data according to the first voice data and the second voice data. As can be seen, in response to receiving the obtaining instruction for the target voice data and detecting that the first microphone of the first wireless earphone and the second microphone of the second wireless earphone are blocked, the wireless earphone can combine the first voice data obtained when the first wireless earphone is blocked and the second voice data obtained when the second wireless earphone is blocked into the target voice data, which is beneficial to improving integrity of obtained voice data. In addition, the first operation and the second operation can be performed in parallel, which can improve a speed of data processing.

In one implementation, the processing unit 603 configured to generate the target voice data according to the first voice data and the second voice data is configured to: divide, according to a first time interval, the first voice data to obtain a first data-segment group; divide, according to a second time interval, the second voice data to obtain a second data-segment group; and generate the target voice data by combining the first data-segment group and the second data-segment group.

In one implementation, the processing unit 603 configured to generate the target voice data by combining the first data-segment group and the second data-segment group is configured to: determine at least one first data segment in the first data-segment group whose frequency is lower than a preset threshold frequency; obtain at least one second data segment in the second data-segment group corresponding to the at least one first data segment in terms of a time parameter; and generate the target voice data by combining a data segment of the first data-segment group other than the at least one first data segment with the at least one second data segment.

In one implementation, the processing unit 603 configured to generate the target voice data by combining the data segment of the first data-segment group other than the at least one first data segment with the at least one second data segment is configured to: obtain reference voice data by combining, according to time identifiers of data obtaining, the data segment of the first data-segment group other than the at least one first data segment with the at least one second data segment; determine a keyword from a preset keyword set according to a data amount of a missing data segment, in response to detecting existence the missing data segment in the reference voice data; and obtain the target voice data by adding voice data corresponding to the keyword to the missing data segment.

In one implementation, the detecting unit 602 configured to determine that the first microphone is blocked according to the first voice data and the second microphone is blocked according to the second voice data is configured to: determine a first data amount of voice data in the first voice data whose volume is less than a threshold volume, and a second data amount of voice data in the second voice data whose volume is less than the volume threshold; determine that the first microphone is blocked, in response to detecting that a proportion of the first data amount to a data amount of the first voice data is greater than a preset threshold proportion; and determine that the second microphone is blocked, in response to detecting that a proportion of the second data amount to a data amount of the second voice data is greater than the preset threshold proportion.

In one implementation, the operating unit 601 is further configured to obtain the target voice data with a mobile terminal in communication connection with the wireless earphone. The detecting unit 602 configured to determine that the first microphone is blocked according to the first voice data and the second microphone is blocked according to the second voice data is configured to: compare first energy of the first voice data with third energy of the target voice data obtained by the mobile terminal, in response to detecting that a first difference between the first energy and second energy of the second voice data is less than a first preset difference; and determine that the first microphone and the second microphone are blocked, in response to detecting that a second difference between the first energy and the third energy is greater than a second preset difference.

The operating unit 601 may be a microphone or a transceiver, and the detecting unit 602 and the processing unit 603 may be processors.

In implementations of the disclosure, a computer storage medium is further provided. The computer storage medium stores a computer program for electronic data interchange. The computer program is operable with a computer to execute all or part of the operations in the method for processing voice data of the foregoing method implementations.

In implementations of the disclosure, a computer program product is further provided. The computer program product includes a non-transitory computer-readable storage medium storing a computer program. The computer program is operable with a computer to execute all or part of the operations in the method for processing voice data of the foregoing method implementations.

It is to be noted that, for the sake of simplicity, the foregoing method implementations are described as a series of action combinations, however, it will be appreciated by those skilled in the art that the disclosure is not limited by the sequence of actions described. That is because that, according to the disclosure, certain steps or operations may be performed in other order or simultaneously. Besides, it will be appreciated by those skilled in the art that the implementations described in the specification are exemplary implementations and the actions and modules involved are not necessarily essential to the disclosure.

In the foregoing implementations, the description of each implementation has its own emphasis. For the parts not described in detail in one implementation, reference may be made to related descriptions in other implementations.

In the implementations of the disclosure, it should be understood that, the device disclosed in implementations provided herein may be implemented in other manners. For example, the device implementations described above are merely illustrative; for instance, the division of the unit is only a logical function division and there can be other manners of division during actual implementations, for example, multiple units or assemblies may be combined or may be integrated into another system, or some features may be ignored, omitted, or not performed. In addition, coupling or communication connection between each illustrated or discussed component may be direct coupling or communication connection, or may be indirect coupling or communication among devices or units via some interfaces, and may be electrical connection or other forms of connection.

The units described as separate components may or may not be physically separated, the components illustrated as units may or may not be physical units, that is, they may be in the same place or may be distributed to multiple network elements. All or part of the units may be selected according to actual needs to achieve the purpose of the technical solutions of the implementations.

In addition, the functional units in various implementations of the disclosure may be integrated into one processing unit, or each unit may be physically present, or two or more units may be integrated into one unit. The above-mentioned integrated unit can be implemented in the form of hardware or a software function unit.

The integrated unit may be stored in a computer readable memory when it is implemented in the form of a software functional unit and is sold or used as a separate product. Based on such understanding, the technical solutions of the disclosure essentially, or the part of the technical solutions that contributes to the related art, or all or part of the technical solutions, may be embodied in the form of a software product which is stored in a memory and includes instructions for causing a computer device (which may be a personal computer, a server, or a network device and so on) to perform all or part of the operations described in the various implementations of the disclosure. The memory includes various medium capable of storing program codes, such as a universal serial bus (USB), a read-only memory (ROM), a random access memory (RAM), a removable hard disk, Disk, compact disc (CD), or the like.

It will be understood by those of ordinary skill in the art that all or a part of the various methods of the implementations described above may be accomplished by means of a program to instruct associated hardware, the program may be stored in a computer readable memory, which may include a flash memory, a ROM, a RAM, Disk or CD, and so on.

While the principles and implementations of the disclosure have been described in connection with illustrative implementations, it is to be understood that the foregoing implementations are only used to help understand the method and core idea of the disclosure. As will occur to those skilled in the art, the disclosure is susceptible to various modifications and changes without departing from the spirit and principle of the disclosure. Therefore, the disclosure is not to be limited to the disclosed implementations.

## Claims

1. A method for processing voice data, the method being applicable to a wireless earphone comprising a first wireless earphone and a second wireless earphone, the first wireless earphone comprising a first microphone, the second wireless earphone comprising a second microphone, and the method comprising:
performing a first operation and a second operation in parallel in response to receiving an obtaining instruction for target voice data, the first operation being to obtain first voice data with the first microphone, and the second operation being to obtain second voice data with the second microphone;
determining that the first microphone is blocked according to the first voice data and the second microphone is blocked according to the second voice data; and
generating the target voice data according to the first voice data and the second voice data.

2. The method of claim 1, wherein generating the target voice data according to the first voice data and the second voice data comprises:
dividing, according to a first time interval, the first voice data to obtain a first data-segment group;
dividing, according to a second time interval, the second voice data to obtain a second data-segment group; and
generating the target voice data by combining the first data-segment group and the second data-segment group.

3. The method of claim 2, wherein generating the target voice data by combining the first data-segment group and the second data-segment group comprises:
determining at least one first data segment in the first data-segment group whose frequency is lower than a preset threshold frequency;
obtaining at least one second data segment in the second data-segment group corresponding to the at least one first data segment in terms of a time parameter; and
generating the target voice data by combining a data segment of the first data-segment group other than the at least one first data segment with the at least one second data segment.

4. The method of claim 3, wherein generating the target voice data by combining the data segment of the first data-segment group other than the at least one first data segment with the at least one second data segment comprises:
obtaining reference voice data by combining, according to time identifiers of data obtaining, the data segment of the first data-segment group other than the at least one first data segment with the at least one second data segment;
determining a keyword from a preset keyword set according to a data amount of a missing data segment, in response to detecting existence the missing data segment in the reference voice data; and
obtaining the target voice data by adding voice data corresponding to the keyword to the missing data segment.

5. The method of claim 2, wherein the first time interval is the same as the second time interval, and generating the target voice data by combining the first data-segment group and the second data-segment group comprises:
for each first data segment in the first data-segment group,
comparing the first data segment with a second data segment in the second data-segment group corresponding to the first data segment, wherein a time period corresponding to the first data segment is the same as a time period corresponding to the second data segment; and
selecting a data segment with a higher voice frequency from the first data segment and the second data segment corresponding to the first data segment as a target data segment; and
obtaining the target voice data by combining a plurality of target data segments.

6. The method of claim 1, wherein generating the target voice data according to the first voice data and the second voice data comprises:
determining at least one third voice data segment in the first voice data whose amplitude is zero;
obtaining at least one fourth voice data segment in the second voice data corresponding to the at least one third voice data segment in terms of a time parameter; and
obtaining the target voice data by combining a data segment of the first voice data other than the at least one third voice data segment with the at least one fourth voice data segment.

7. The method of any of claims 1 to 6, wherein determining that the first microphone is blocked according to the first voice data and the second microphone is blocked according to the second voice data comprises:
determining a first data amount of voice data in the first voice data whose volume is less than a threshold volume, and a second data amount of voice data in the second voice data whose volume is less than the volume threshold;
determining that the first microphone is blocked, in response to detecting that a proportion of the first data amount to a data amount of the first voice data is greater than a preset threshold proportion; and
determining that the second microphone is blocked, in response to detecting that a proportion of the second data amount to a data amount of the second voice data is greater than the preset threshold proportion.

8. The method of any of claims 1 to 6, further comprising:
obtaining the target voice data with a mobile terminal in communication connection with the wireless earphone; and
determining that the first microphone is blocked according to the first voice data and the second microphone is blocked according to the second voice data comprising:
comparing first energy of the first voice data with third energy of the target voice data obtained by the mobile terminal, in response to detecting that a first difference between the first energy and second energy of the second voice data is less than a first preset difference; and
determining that the first microphone and the second microphone are blocked, in response to detecting that a second difference between the first energy and the third energy is greater than a second preset difference.

9. The method of any of claims 1 to 6, wherein determining that the first microphone is blocked according to the first voice data and the second microphone is blocked according to the second voice data comprises:
detecting existence of a fifth voice data segment in the first voice data and existence of a sixth voice data segment in the second voice data, wherein both the fifth voice data segment and the sixth voice data segment are missing data segments; and
determining that the first microphone and the second microphone are blocked, when there is the fifth voice data segment in the first voice data and there is the sixth voice data segment in the second voice data.

10. A device for processing voice data, the device being applicable to a wireless earphone comprising a first wireless earphone and a second wireless earphone, the first wireless earphone comprising a first microphone, the second wireless earphone comprising a second microphone, and the device comprising:
an operating unit, configured to perform a first operation and a second operation in parallel in response to receiving an obtaining instruction for target voice data, the first operation being to obtain first voice data with the first microphone, and the second operation being to obtain second voice data with the second microphone;
a detecting unit, configured to determine that the first microphone is blocked according to the first voice data and the second microphone is blocked according to the second voice data; and
a processing unit, configured to generate the target voice data according to the first voice data and the second voice data.

11. The device of claim 10, wherein the processing unit configured to generate the target voice data according to the first voice data and the second voice data is configured to:
divide, according to a first time interval, the first voice data to obtain a first data-segment group;
divide, according to a second time interval, the second voice data to obtain a second data-segment group; and
generate the target voice data by combining the first data-segment group and the second data-segment group.

12. The device of claim 11, wherein the processing unit configured to generate the target voice data by combining the first data-segment group and the second data-segment group is configured to:
determine at least one first data segment in the first data-segment group whose frequency is lower than a preset threshold frequency;
obtain at least one second data segment in the second data-segment group corresponding to the at least one first data segment in terms of a time parameter; and
generate the target voice data by combining a data segment of the first data-segment group other than the at least one first data segment with the at least one second data segment.

13. The device of claim 12, wherein the processing unit configured to generate the target voice data by combining the data segment of the first data-segment group other than the at least one first data segment with the at least one second data segment is configured to:
obtain reference voice data by combining, according to time identifiers of data obtaining, the data segment of the first data-segment group other than the at least one first data segment with the at least one second data segment;
determine a keyword from a preset keyword set according to a data amount of a missing data segment, in response to detecting existence the missing data segment in the reference voice data; and
obtain the target voice data by adding voice data corresponding to the keyword to the missing data segment.

14. The device of claim 11, wherein the first time interval is the same as the second time interval, the processing unit configured to generate the target voice data by combining the first data-segment group and the second data-segment group is configured to:
for each first data segment in the first data-segment group,
compare the first data segment with a second data segment in the second data-segment group corresponding to the first data segment, wherein a time period corresponding to the first data segment is the same as a time period corresponding to the second data segment; and
select a data segment with a higher voice frequency from the first data segment and the second data segment corresponding to the first data segment as a target data segment; and
obtain the target voice data by combining a plurality of target data segments.

15. The device of claim 10, wherein the processing unit configured to generate the target voice data according to the first voice data and the second voice data is configured to:
determine at least one third voice data segment in the first voice data whose amplitude is zero;
obtain at least one fourth voice data segment in the second voice data corresponding to the at least one third voice data segment in terms of a time parameter; and
obtain the target voice data by combining a data segment of the first voice data other than the at least one third voice data segment with the at least one fourth voice data segment.

16. The device of any of claims 10 to 15, wherein the detecting unit configured to determine that the first microphone is blocked according to the first voice data and the second microphone is blocked according to the second voice data is configured to:
determine a first data amount of voice data in the first voice data whose volume is less than a threshold volume, and a second data amount of voice data in the second voice data whose volume is less than the volume threshold;
determine that the first microphone is blocked, in response to detecting that a proportion of the first data amount to a data amount of the first voice data is greater than a preset threshold proportion; and
determine that the second microphone is blocked, in response to detecting that a proportion of the second data amount to a data amount of the second voice data is greater than the preset threshold proportion.

17. The device of any of claims 10 to 15, wherein the operating unit is further configured to:
obtain the target voice data with a mobile terminal in communication connection with the wireless earphone; and
wherein the detecting unit configured to determine that the first microphone is blocked according to the first voice data and the second microphone is blocked according to the second voice data is configured to:
compare first energy of the first voice data with third energy of the target voice data obtained by the mobile terminal, in response to detecting that a first difference between the first energy and second energy of the second voice data is less than a first preset difference; and
determine that the first microphone and the second microphone are blocked, in response to detecting that a second difference between the first energy and the third energy is greater than a second preset difference.

18. The device of any of claims 10 to 15, wherein the detecting unit configured to determine that the first microphone is blocked according to the first voice data and the second microphone is blocked according to the second voice data is configured to:
detect existence of a fifth voice data segment in the first voice data and existence of a sixth voice data segment in the second voice data, wherein both the fifth voice data segment and the sixth voice data segment are missing data segments; and
determine that the first microphone and the second microphone are blocked, when there is the fifth voice data segment in the first voice data and there is the sixth voice data segment in the second voice data.

19. A wireless earphone, comprising:
a processor;
a memory; and
one or more programs, stored in the memory;
the programs comprising instructions which, when executed by the processor, cause the processor to execute the operations in the method of any of claims 1 to 9.

20. A computer-readable storage medium, storing a computer program for electronic data interchange, the computer program causes a computer to execute the method of any of claims 1 to 9.
